# EUROPÄISCHE PATENTSCHRIFT

(11) **EP 2 872 447 B1**
(45) Veröffentlichungstag und Bekanntmachung des Hinweises auf die Patenterteilung: **28.12.2016**
(21) Anmeldenummer: 13732498.4
(22) Anmeldetag: 28.06.2013
(51) Int. Cl.: C01G 51/10

(54) **VERFAHREN ZUR HERSTELLUNG VON WÄSSRIGEN LÖSUNGEN VON KOBALTSULFAT**
PROCÉDÉ DE FABRICATION DE SOLUTIONS AQUEUSES DE SULFATE DE COBALT
METHOD FOR PRODUCING AQUEOUS SOLUTIONS OF COBALT SULPHATE

(30) Priorität: 10.07.2012 EP 12175652
(43) Veröffentlichungstag der Anmeldung: 20.05.2015
(73) Patentinhaber: BASF SE, 67056 Ludwigshafen am Rhein (DE)
(72) Erfinder: SCHRÖDLE, Simon, 86609 Donauwörth (DE); WAGNER, Oliver, 76661 Philippsburg (DE)
(74) Vertreter: BASF IP Association
(86) Internationale Anmeldenummer: PCT/EP2013/063585
(87) Internationale Veröffentlichungsnummer: WO 2014/009173

(56) Entgegenhaltungen:
- EP-A1- 0 047 076
- SU-A1- 385 927
- DATABASE WPI Week 200474 Thomson Scientific, London, GB; AN 2004-752400 XP002688463, & JP 2004 300490 A 28. Oktober 2004 (2004-10-28)
- DATABASE WPI Week 199003 Thomson Scientific, London, GB; AN 1990-020184 XP002688464, & JP 1 301526 A 5. Dezember 1989 (1989-12-05)

## Beschreibung

Die vorliegende Erfindung betrifft ein Verfahren zur Herstellung einer wässrigen Kobaltsulfatlösung mit einem pH-Wert von mindestens 4, dadurch gekennzeichnet, dass man
(a) metallisches Kobalt in wässriger Schwefelsäure in einer Atmosphäre von Wasserstoff, von Inertgas oder Stickstoff/Sauerstoff-Gemischen, auslöst, die Stickstoff und Sauerstoff in einem Volumenverhältnis im Bereich von 6:1 bis 100 : 1 enthalten, und
(b) die so entstandene saure Kobaltsulfatlösung mit Sauerstoff, Sauerstoff-haltigem Gas oder mit einer Substanz behandelt, die in wässrigem Milieu Sauerstoff abspalten kann.

Kobaltsulfat kann man für zahlreiche Anwendungen als Ausgangsmaterial verwenden, beispielsweise für Pigmente oder zur Herstellung von Glasuren von Ton. Eine besondere Bedeutung hat Kobaltsulfat in jüngerer Zeit als Kobalt-Quelle für Elektrodenmaterialien von Lithium-Ionen-Batterien erlangt. Man fällt aus wässrigen Lösungen von Übergangsmetallsulfaten, beispielsweise aus gemischten Nickel-Kobalt-Mangan-Sulfat-Lösungen, gemischte Hydroxide oder Carbonate der betreffenden Übergangsmetalle aus und verarbeitet diese dann - zusammen mit einer Lithiumverbindung, beispielsweise Lithiumhydroxid oder Lithiumcarbonat, thermisch zu einem Elektrodenmaterial.

Eine Schlüsselverbindung für Kobalt ist dabei das Kobaltsulfat, und zwar in Substanz oder in wässriger Lösung. Kobaltsulfat wird in vielen Fällen durch Lösen von metallischem Kobalt in Schwefelsäure hergestellt.

Dabei ist es für die Weiterverarbeitung von großer Bedeutung, möglichst solche Lösungen von Kobaltsulfat, zu erhaltene, die einen vergleichsweise hohen pH-Wert aufweisen, beispielsweise mindestens 4. Es ist dabei wünschenswert, solche Lösungen von Kobaltsulfat zu erhalten, die in Lithium-Ionen-Batterien störende und somit unerwünschte Elemente nur in äußerst geringer Menge enthalten. Je nach Anwendung und Aufbau der Lithium-Ionen-Batterie werden beispielsweise Kupfer, Aluminium, Chrom, Eisen oder Kalzium als störend betrachtet. Chrom, Kupfer und Eisen kann man bei einem pH-Wert von etwa 4 oder höher mit vertretbarem Aufwand abtrennen, bei pH-Werten von 1 hingegen nur äußerst schwierig.

So wird in der Schrift SU 385927 ein Verfahren offenbart, in dem man zunächst in einem emaillierten Apparat bei 80 bis 90°C metallisches Kobalt gleichzeitig mit 40% Schwefelsäure und mit 30% wässriger H₂O₂ behandelt. Durch ein derartiges Vorgehen kann ein Wasserstoff-Sauerstoff-Gemisch im Apparat gebildet werden, was aus Sicherheitsgründen nachteilig ist. Die so erhältliche Kobaltsulfatlösung hat einen Restschwefelsäure-Gehalt von 0,2 bis 0,4%, was einem pH-Wert im Bereich von 1,5 bis 1,8 entspricht. Derartige Lösungen sind schwer aufzureinigen.

JP 20047300490 offenbart die Bearbeitung von LiCoO2-haltigen Batterieresten, die elementares Kobalt enthalten. Die Auflösung von L1CoO₂, in dem das Kobalt die Oxidationsstufe +3 aufweist, erfolgt durch Behandlung in Gegenwart von Sauerstoff.

Es ist denkbar, den pH-Wert von Kobaltsulfatlösungen mit Hilfe von starken Basen wie beispielsweise Alkalimetallhydroxid einzustellen. Dazu ist jedoch zu beachten, dass dieser Schritt eine sehr genaue Titration erfordert. Außerdem erhält man auf diesem Wege Lösungen von Kobaltsulfat, die erhebliche Anteile an Natriumsalzen enthalten.

Es ist auch möglich, den pH-Wert von Kobaltsulfatlösungen mit Hilfe von anderen Komplexbilnern zu erhöhen, beispielsweise mit Ammoniak. Ammoniak bildet allerdings auch sehr stabile und hervorragend lösliche Kupferkomplexe. Eine Abtrennung von Kupferkomplexen aus einer Kobaltamin-Sulfat-Lösung ist ebenfalls schwierig.

Es bestand daher die Aufgabe, ein Verfahren bereit zu stellen, durch das man Kobaltsulfatlösungen herstellen kann, die einen pH-Wert von mindestens 4 aufweisen, und das sich technisch gut durchführen lässt. Insbesondere bestand die Aufgabe, ein Verfahren bereit zu stellen, durch das sich Kobaltsulfatlösungen herstellen lassen, die nur äußerst geringe Anteile an Ionen aufweisen, die in Lithium-Ionen-Batterien stören.

Dementsprechend wurde das eingangs definierte Verfahren gefunden, kurz auch erfindungsgemäßes Verfahren genannt.

Durch die Ausführung des erfindungsgemäßen Verfahrens erhält man wässrige Kobaltsulfatlösungen mit einem pH-Wert von mindestens 4, bevorzugt 4 bis 8, besonders bevorzugt 4,5 bis 7. Der pH-Wert wird jeweils bei 23°C bestimmt, vorzugsweise mit einer Glaselektrode, besonders bevorzugt mit einer Kombinationselektrode.

Das erfindungsgemäße Verfahren weist mindestens zwei Verfahrensschritte (a) und (b) auf, kurz auch Schritt (a) und Schritt (b) genannt.

In Schritt (a) des erfindungsgemäßen Verfahrens löst man metallisches Kobalt in wässriger Schwefelsäure in einer Atmosphäre von Wasserstoff, von Inertgas oder von solchen Stickstoff/Sauerstoff-Gemischen auf, die Stickstoff und Sauerstoff in einem Volumenverhältnis im Bereich von 6:1 bis 100 : 1 enthalten.

Zur Durchführung des erfindungsgemäßen Verfahrens geht man von metallischem Kobalt aus. Metallisches Kobalt kann man beispielsweise in Form von Pulver, Blechen, Platten, Brocken, Spänen, Elektrodenbruchstücken, gegebenenfalls geschnitten, in Form von oder sogenannten Briketts (Briquettes) einsetzen, bevorzugt sind Brocken, Briketts und Elektrodenbruchstücke, die geschnitten sein können. Pulver können beispielsweise einen mittleren Partikel-Durchmesser im Bereich von 0,1 bis 1 mm aufweisen. Bleche können beispielsweise eine Dicke im Bereich von 0,1 mm bis 5 mm aufweisen und eine Länge und Breite, die gleich oder verschieden sind und jeweils im Bereich von 2 cm bis 10 Meter, insbesondere im Bereich von 2 bis 10 cm. Platten können beispielsweise eine Dicke im Bereich von 5,5 mm bis 2 cm aufweisen und eine Länge und Breite, die gleich oder verschieden sind und jeweils im Bereich von 10 cm bis 1 m. Brocken im Rahmen der vorliegenden Erfindung können beispielsweise Länge, Breite und Höhe im Bereich von 5 mm bis 10 cm aufweisen, wobei die kleinste und die größte Dimension maximal um den Faktor drei voneinander verschieden sind. Späne können beispielsweise eine Dicke im Bereich von 0,1 bis 1 mm aufweisen, eine Breite im Bereich von 1 mm bis 5 mm und eine Länge im Bereich von 1 cm bis 20 cm aufweisen. Briketts können eine Länge im Bereich von 2 bis 3 cm und einen Durchmesser im Bereich von 12 bis 14 mm aufweisen. Elektrodenbruchstücke können beispielsweise eine Dicke im Bereich von 0,5 bis 7 mm haben. in vielen Fällen haben ungeschnittene Elektrodenbruchstücke eine Dicke im Bereich von 1 bis 3 mm und unregelmäßige Querschnitte, wobei der Durchmesser an der breitesten Stelle 40 mm nicht überschreitet und der mittlere Durchmesser im Bereich von 10 bis 30 mm beträgt. Geschnittene Elektroden können eine Dicke im Bereich von 0,5 bis 7 mm aufweisen. Beispielsweise sind geschnittene Elektrodenbruchstücke erhältlich mit einer Dicke von 1 mm und einem Querschnitt von 10·10 cm oder solche mit einer Dicke im Bereich von 5 bis 7 mm und einem Querschnitt von 55·55 mm.

In einer Ausführungsform der vorliegenden Erfindung geht man von metallischem Kobalt aus, welches hohe Reinheit aufweist, beispielsweise weniger als insgesamt 100 ppm Fremdmetalle. Als Fremdmetalle sind beispielsweise Ca, Al, Fe, Cu, Cr und Mg zu nennen. In einer anderen Ausführungsform der vorliegenden Erfindung geht man von Kobalt aus, welches mit einem oder mehreren der vorstehend genannten Fremdmetalle verunreinigt ist, beispielsweise mit 100 ppm bis zu insgesamt 1 Gew.-% Ca, Al, Fe, Cu, Cr und/oder Mg, bezogen jeweils auf Kobalt.

Beispielsweise kann metallisches Kobalt im Bereich von 10 bis 200 ppm Ca enthalten, bezogen auf Kobalt.

Beispielsweise kann metallisches Kobalt im Bereich von 10 bis 500 ppm Fe enthalten, bezogen auf Kobalt.

Beispielsweise kann metallisches Kobalt im Bereich von 2 bis 500 ppm Cu enthalten, bezogen auf Kobalt.

Beispielsweise kann metallisches Kobalt im Bereich von 2 bis 500 ppm Cr enthalten, bezogen auf Kobalt.

Beispielsweise kann metallisches Kobalt im Bereich von 10 bis 1000 ppm Mg enthalten, bezogen auf Kobalt.

Beispielsweise kann metallisches Kobalt im Bereich von 1 bis 100 ppm Al enthalten, bezogen auf Kobalt.

Dabei sind im Rahmen der vorliegenden Erfindung unter ppm stets Gew.-ppm zu verstehen, wenn nicht ausdrücklich anders angegeben.

In einer Variante enthält metallisches Kobalt im Bereich von 10 bis 200 ppm Ca, im Bereich von 10 bis 500 ppm Fe, im Bereich von 2 bis 500 ppm Cr, im Bereich von 10 bis 1000 ppm Mg, im Bereich von 1 bis 100 ppm Al und im Bereich von 2 bis 500 ppm Cu, bezogen jeweils auf Kobalt.

In einer Ausführungsform der vorliegenden Erfindung kann metallisches Kobalt Nickel und/oder Mangan enthalten, beispielsweise jeweils bis zu 5 Gew.-%. Bevorzugt enthält metallisches Kobalt keine messbaren Anteile an Mangan und bis zu 1 Gew.-% Nickel. Derartige Anteile an Mangan und/oder Nickel stören insbesondere dann nicht, wenn man Kobaltsulfat für Anwendungen in Lithium-Ionen-Batterien einzusetzen wünscht.

In einer Ausführungsform der vorliegenden Erfindung geht man von Kobalt aus, welches man aus Elektrodenabfällen gewinnt, oder man zerkleinert die betreffenden Elektrodenabfälle.

Unter "Auflösen" ist im Zusammenhang mit Schritt (a) eine chemische Umsetzung zu verstehen, bei der in wässrigem Medium nicht lösliches metallisches Kobalt in wasserlösliches Kobaltsulfat überführt wird.

Zur Durchführung von Schritt (a) setzt man weiterhin wässrige Schwefelsäure ein.

Unter wässriger Schwefelsäure ist im Rahmen der vorliegenden Erfindung eine Schwefelsäure zu verstehen, die Wasser enthält, welches unprotoniert oder protoniert sein kann. Beispielsweise kann der Wassergehalt von wässriger Schwefelsäure im Bereich von 5 bis 95 Gew.-% liegen, bezogen auf H₂SO₄, bevorzugt sind 15 bis 30 Gew.-%, jeweils zu Beginn des Schritts (a).

In einer Ausführungsform der vorliegenden Erfindung bringt man metallisches Kobalt und wässrige Schwefelsäure miteinander in Kontakt. Beispielsweise kann man dazu so vorgehen, dass man ein Reaktionsgefäß zunächst mit Kobalt befüllt und dann Schwefelsäure zusetzt. In einer anderen Variante kann man in einem Reaktionsgefäß zunächst wässrige Schwefelsäure vorlegen und dann metallisches Kobalt hinzufügen.

In einer speziellen Variante geht man so vor, dass man in einem Reaktionsgefäß metallisches Kobalt vorlegt und dann wässrige Schwefelsäure hinzufügt. Man entfernt kontinuierlich die so entstehende saure Kobaltsulfatlösung und setzt, beispielsweise mit Hilfe einer Pumpe, frische wässrige Schwefelsäure zu oder führt saure Kobaltsulfatlösung im Kreis. Durch dieses Vorgehen ist eine besonders einfache Wärmeabfuhr möglich.

In einer Ausführungsform der vorliegenden Erfindung führt man Schritt (a) des erfindungsgemäßen Verfahrens bei einer Temperatur im Bereich von 80 bis 110°C durch, bevorzugt sind 95 bis 99°C. Dabei ist es möglich, bei erhöhtem Druck wie beispielsweise 1,1 bar bis 5 bar zu arbeiten, wenn man Schritt (a) bei Temperaturen von 100° oder mehr durchführen möchte. Vorzugsweise führt man Schritt (a) bei Siedekühlung durch und stellt dadurch Druck und Temperatur automatisch ein.

In einer Ausführungsform der vorliegenden Erfindung führt man Schritt (a) des erfindungsgemäßen Verfahrens bei Normaldruck durch. In einer anderen Ausführungsform des erfindungsgemäßen Verfahrens führt man Schritt (a) bei dem Druck durch, beispielsweise 1 bar bis 5 bar, der sich bei Siedekühlung automatisch einstellt.

Schritt (a) führt man in einer Atmosphäre von Wasserstoff oder von Inertgas oder von Stickstoff-Sauerstoff-Gemischen durch, die Stickstoff und Sauerstoff in einem Volumenverhältnis im Bereich von 6:1 bis 100 : 1 enthalten, das heißt, man löst metallisches Kobalt in einer Atmosphäre von Wasserstoff oder von Inertgas oder von Stickstoff-Sauerstoff-Gemischen auf, die Stickstoff und Sauerstoff in einem Volumenverhältnis im Bereich von 6:1 bis 100 : 1 enthalten. Als Inertgas sind beispielsweise Edelgase wie Argon geeignet. Als Inertgase sind Edelgase, beispielsweise Argon, und insbesondere Stickstoff geeignet. Stickstoff/Sauerstoff-Gemische, die Stickstoff und Sauerstoff in einem Volumenverhältnis im Bereich von 6 : 1 bis 100 : 1 enthalten, bevorzugt sind 23 : 1 bis 80 : 1, werden im Rahmen der vorliegenden Erfindung auch als Sauerstoff-arme Luft bezeichnet. Im Verlauf des Auflösens von Kobalt wird Wasserstoff gebildet, der sich anreichern kann und für die eigentliche chemische Reaktion des Auflösens von Kobalt inert ist.

Bevorzugt arbeitet man in einer Atmosphäre von Wasserstoff oder Inertgas. Bevorzugtes Inertgas ist Stickstoff.

Um eine Atmosphäre von Sauerstoff-armer Luft zu erzeugen, kann man beispielsweise Luft und Stickstoff miteinander mischen und in das Reaktionsgefäß einspeisen. So ist es beispielsweise möglich, als Reaktionsgefäß einen Rohrreaktor zu wählen, der als Kolonne ausgebildet ist und einen Siebboden oder ein Gitter als Boden aufweist, durch den man Sauerstoff-arme Luft, Inertgas oder Wasserstoff leitet.

In einer Ausführungsform der vorliegenden Erfindung führt man Schritt (a) kontinuierlich durch, wobei man die entstehende wässrige Kobaltsulfatlösung kontinuierlich abzieht und nach Bedarf wässrige Schwefelsäure und gegebenenfalls metallisches Kobalt nachfüllt. In einer anderen Ausführungsform der vorliegenden Erfindung führt man Schritt (a) diskontinuierlich durch.

In einer Ausführungsform der vorliegenden Erfindung führt man Schritt (a) in einem Rührkessel durch. In einer anderen Ausführungsform der vorliegenden Erfindung führt man Schritt (a) in einem Rohrreaktor durch, der als Kolonne ausgebildet ist und einen Siebboden oder ein Gitter als Boden aufweist.

Als Werkstoffe für das Reaktionsgefäß kommen beispielsweise Epoxidharze, ungefüllt oder gefüllt mit Glasfasern in Frage, weiterhin laminierte Epoxid-Glasfaser-Werkstoffe, Kunststoffe wie Polypropylen, PVC oder PVDF in Frage, auch in Stahlmantel eingebrachte Kunststoffschläuche in Frage. Weiterer möglicher Werkstoff ist Blei oder Bleilegierungen. Besonders bevorzugt ist Polypropylen oder glasfaserverstärktes Epoxid. Mit vorstehend genanntem Werkstoff kann man Metallbehälter, beispielsweise Stahlbehälter, auskleiden.

Man kann das erfindungsgemäße Verfahren so durchführen, dass man Schritt (a) einmal ausführt, beispielsweise mit einer Dauer im Bereich von 30 Sekunden bis 30 Minuten. In einer anderen Ausführungsform der vorliegenden Erfindung führt man Schritt (a) mehrfach durch, beispielsweise zweimal bis zehnmal und jeweils mit einer Dauer, gleich oder verschieden, im Bereich von 40 Sekunden bis 5 Minuten.

In einer Ausführungsform der vorliegenden Erfindung kann man Schritt (a) so lange durchführen, bis der Gehalt an H₂SO₄ auf 0,05 bis 1 Gew.-%, bezogen auf in Schritt (a) erhältliche saure Kobaltsulfatlösung, abgesunken ist, bevorzugt 0,1 bis 0,5 Gew.-%.

Man erhält eine saure Kobaltsulfat-Lösung, die beispielsweise einen pH-Wert im Bereich von 0,7 bis 2 aufweisen kann.

In Schritt (b) des erfindungsgemäßen Verfahrens behandelt man die so entstandene saure Kobaltsulfatlösung mit Sauerstoff, Sauerstoff-haltigem Gas oder mit einer Substanz, die in wässrigem Milieu Sauerstoff abspalten kann. Dabei ist unter "behandeln mit Sauerstoff" zu verstehen, dass man mit reinem (99% oder mehr) gasförmigem Sauerstoff behandelt. Als Sauerstoffhaltiges Gas kann man beispielsweise Luft oder Sauerstoff-angereicherte Luft wählen. Bevorzugt ist Luft.

Als Substanzen, die in wässrigem Milieu Sauerstoff abspalten können, sind insbesondere Peroxide zu nennen, beispielsweise anorganische oder organische Peroxide, weiterhin sind anorganische Peroxosalze zu nennen. In einer Ausführungsform der vorliegenden Erfindung wählt man Substanzen, die in wässrigem Milieu Sauerstoff abspalten können, aus H₂O₂, anorganischen Peroxiden, beispielsweise Na₂O₂, anorganischen Persulfaten, beispielsweise Na₂S₂O₈ oder K₂S₂O₈, und anorganischen Percarbonaten, beispielsweise Natriumpercarbonat.

In einer Ausführungsform der vorliegenden Erfindung behandelt man mit einer Kombination von einem Gas, gewählt aus Sauerstoff und Sauerstoff-haltigem Gas, und einer Substanz, die in wässrigem Milieu Sauerstoff abspalten kann.

In einer Ausführungsform der vorliegenden Erfindung führt man Schritt (b) des erfindungsgemäßen Verfahrens bei einer Temperatur im Bereich von 80 bis 110°C durch, bevorzugt sind 90 bis 100°C. Dabei ist es möglich, bei erhöhtem Druck wie beispielsweise 1,1 bar bis 5 bar zu arbeiten, wenn man Schritt (b) bei Temperaturen von 100° oder mehr durchführen möchte. Vorzugsweise führt man Schritt (a) bei Siedekühlung durch und stellt dadurch Druck und Temperatur automatisch ein.

In einer Ausführungsform der vorliegenden Erfindung führt man Schritt (b) des erfindungsgemäßen Verfahrens bei Normaldruck durch. In einer anderen Ausführungsform des erfindungsgemäßen Verfahrens führt man Schritt (b) bei erhöhtem Druck durch, beispielsweise 1,1 bar bis 5 bar. Vorzugsweise führt man Schritt (a) bei Siedekühlung durch und stellt dadurch Druck und Temperatur automatisch ein.

Die Dauer von Schritt (b) kann im Bereich von 30 Sekunden bis 30 Minuten liegen, bevorzugt sind 40 Sekunden bis 5 Minuten. In einer Ausführungsform der vorliegenden Erfindung führt man Schritt (b) mehrfach durch, indem man die saure Kobaltsulfatlösung mehrfach mit Sauerstoff oder Sauerstoff-haltigem Gas behandelt, vorzugsweise in Gegenwart von metallischem Kobalt. Dabei kann dann jeder einzelne Behandlungsschritt im Bereich von 30 Sekunden bis 30 Minuten dauern.

Schritt (b) des erfindungsgemäßen Verfahrens kann man im selben Gefäß durchführen wie Schritt (a), oder man überführt die durch Ausführung von Schritt (a) erhaltene saure Kobaltsulfat-Lösung in ein anderes Gefäß, beispielsweise einen Rührkessel oder einen Rohrreaktor, und oxidiert dort.

In einer Ausführungsform der vorliegenden Erfindung mischt man, beispielsweise durch Rühren mit einem Rührer. In einer anderen Ausführungsform vermischt man durch pneumatisches Rühren, beispielsweise dann, wenn man als Oxidationsmittel Sauerstoff oder ein Sauerstoff-haltiges Gas einsetzt.

In einer bevorzugten Ausführungsform der vorliegenden Erfindung führt man Schritt (b) in Gegenwart von metallischem Kobalt durch.

Durch die Ausführung des erfindungsgemäßen Verfahrens erhält man wässrige Lösungen von Kobaltsulfat, die eine Konzentration im Bereich von 2 bis 15 Gew.-%, bevorzugt 6 bis 9 Gew.-% Co²⁺ aufweisen können. Abhängig von der Art der Durchführung von Schritt (b) kann sich die Konzentration von Kobaltsulfat in Schritt (b) ändern, beispielsweise durch Zugabe einer wässrigen Lösung von H₂O₂ oder durch Verdampfen von Wasser. Insbesondere dann, wenn man in Schritt (b) Sauerstoff oder Sauerstoff-haltiges Gas einsetzt, ändert sich in Schritt (b) die Kobaltsulfat-Konzentration nicht wesentlich.

Durch die Ausführung des erfindungsgemäßen Verfahrens kann man wässrige Lösungen von Kobaltsulfat erhalten, die nur geringe Mengen an Verunreinigungen enthalten, die in Batterien stören würden.

In einer Ausführungsform der vorliegenden Erfindung erhält man eine wässrige Kobaltsulfatlösung, die einen Gehalt an Eisenionen von maximal 50 ppm, bevorzugt 0,1 bis 10 ppm aufweist, bezogen auf Kobalt. Dabei liegen Eisenionen als Fe(II) oder vorzugsweise als Fe(III) vor oder als Mischung von Fe(III) und Fe(II).

In einer Ausführungsform der vorliegenden Erfindung erhält man eine wässrige Kobaltsulfatlösung, die einen Gehalt an Aluminiumionen von maximal 50 ppm, bevorzugt 0,1 bis 10 ppm aufweist, bezogen auf Kobalt.

In einer Ausführungsform der vorliegenden Erfindung erhält man eine wässrige Kobaltsulfatlösung, die einen Gehalt an Kalziumionen von maximal 50 ppm, bevorzugt 1 bis 10 ppm aufweist, bezogen auf Kobalt.

In einer Ausführungsform der vorliegenden Erfindung erhält man eine wässrige Kobaltsulfatlösung, die einen Gehalt an Kupfer(II)-ionen von maximal 50 ppm, bevorzugt 1 bis 10 ppm aufweist, bezogen auf Kobalt.

In einer Ausführungsform der vorliegenden Erfindung erhält man eine wässrige Kobaltsulfatlösung, die einen Gehalt an Chrom(III)-ionen von maximal 50 ppm, bevorzugt 1 bis 10 ppm aufweist, bezogen auf Kobalt.

In einer Ausführungsform der vorliegenden Erfindung erhält man eine wässrige Kobaltsulfatlösung, die einen Gehalt an Kalziumionen, Kupfer(II)-ionen und Chrom(III)-ionen von jeweils maximal 50 ppm, bevorzugt 1 bis 10 ppm aufweist, bezogen auf Kobalt aufweist und einen Gehalt an Eisenionen und Aluminiumionen von jeweils maximal 50 ppm, bevorzugt 0,1 bis 10 ppm.

Den Anteil an Kupfer(II)-ionen, Eisenionen, Kalziumionen, Aluminiumionen und Chrom(III)-ionen kann man dabei beispielsweise durch optische Emissionsspektrometrie mit induktiv gekoppeltem Plasma bestimmen, kurz ICP-OES (englisch für inductively coupled plasma-optical emission spectrometry).

In einer Ausführungsform der vorliegenden Erfindung erhält man eine wässrige Kobaltsulfatlösung, die einen Gehalt an Natriumionen von maximal 1.000 ppm, beispielsweise 100 bis 1000 ppm, bestimmt beispielsweise spektroskopisch, aufweist, bezogen auf Kobalt.

Nickelionen stören in der Regel nicht, wenn man erfindungsgemäß erhaltene Kobaltsulfatlösung zur Herstellung von Elektrodenmaterialien einzusetzen wünscht. In einer Ausführungsform der vorliegenden Erfindung erhält man eine wässrige Kobaltsulfatlösung, die maximal 2 Gew.-% an Nickelionen enthält, bezogen auf Kobalt. Nickel lässt sich beispielsweise durch ICP-OES bestimmen.

In einer Ausführungsform der vorliegenden Erfindung kann man im Anschluss an Schritt (b) einen weiteren Schritt durchführen, indem man
(c) die so entstandene wässrige Kobaltsulfatlösung mit Hilfe eines Filters aufreinigt. Beispiele für geeignete Filtermaterialien sind Filtergewebe, beispielsweise aus Wolle, Baumwolle, Papier, Synthese- oder Mineralfasern. Andere geeignete Filtermaterialien sind beispielsweise poröse Filtermassen, beispielsweise Keramik. Es sind auch Filterkerzen geeignet.

Schritt (c) kann man beispielsweise durch Druck unterstützen, zum Beispiel durch Anlegen eines Unterdrucks auf der Seite des Filtrats, beispielsweise durch Verwendung eines Nutschenfilters, oder durch Anlegen eines Überdrucks auf der Seite des Filterkuchens, beispielsweise mit Hilfe von geeigneten Pumpen.

In einer Ausführungsform der vorliegenden Erfindung setzt man Filter ein, einen mittleren Porendurchmesser im Bereich von 0,1 bis 100 μm, bevorzugt 0,3 bis 50 μm aufweisen.

In einer Variante kann man ein oder mehrere Filterhilfsmittel zusetzen, beispielsweise Kieselgur oder Celite®.

Durch Filtration lassen sich insbesondere Verunreinigungen von Cr(III), Al(III) und Fe(III) entfernen, die als wasserhaltige Oxide oder Hydroxide in erfindungsgemäß erhaltenen Kobaltsulfatlösungen in Form von Niederschlägen vorliegen.

In einer Ausführungsform der vorliegenden Erfindung kann man nach Schritt (b) - gegebenenfalls im Anschluss an Schritt (c) - einen weiteren Schritt durchführen, indem man
(d) die so entstandene wässrige Kobaltsulfatlösung mit Hilfe eines Ionenaustauschers aufreinigt.

In einer Ausführungsform der vorliegenden Erfindung wählt man Ionenaustauscher aus vernetzten, beispielsweise mit Divinylbenzol vernetzten Polystyrolen, die primäre, sekundäre oder bevorzugt tertiäre Aminogruppen aufweisen. Primäre, sekundäre oder bevorzugt tertiäre Aminogruppen können über einen Spacer an die aromatischen Gruppen des Polystyrols gebunden sein, beispielsweise über Methylen- oder Ethylengruppen. Beispiele für tertiäre Aminogruppen sind -CH₂-N(CH₃)₂-Gruppen und -CH₂-N(C₂H₅)₂-Gruppen.

In einer anderen Ausführungsform der vorliegenden Erfindung wählt man Ionenaustauscher setzt man aus mit Divinylbenzol vernetzten Sulfonsäuregruppen-haltigen Polystyrolen.

Der lonentauscher kann sich in einem lonenaustauscherapparat befinden. Ein Ionenaustauscherapparat umfasst dabei mindestens eine mit lonenaustauscherharz gefüllte Säule, bevorzugt mindestens zwei. Technisch vorteilhaft verschaltet man zwei oder mehr Ionenaustauschersäulen miteinander so, dass eine Regeneration einer oder mehrerer lonenaustauschersäulen möglich ist, ohne den bevorzugten kontinuierlichen Betrieb des lonenaustauscherapparats unterbrechen zu müssen. Den Ionenaustauscher kann man beispielsweise mit verdünnter Natronlauge regenerieren. Vor und nach der Behandlung mit Natronlauge kann man ggf. Wasser oder verdünnte Schwefelsäure als Spülmedium einsetzen.

In einer Ausführungsform der vorliegenden Erfindung führt man Schritt (d) bei einer Temperatur im Bereich von 15 bis 40°C durch, bevorzugt im Bereich von 20 bis 35 °C.

In einer Ausführungsform der vorliegenden Erfindung beträgt das Druckgefälle in Schritt (d) im Bereich von 0,1 bis 0,4 bar.

Durch Aufreinigung der Kobaltsulfatlösung mit Hilfe eines Ionenaustauschers kann man beispielsweise Kalziumionen gut aus wässrigen Kobaltsulfatlösungen entfernen.

Durch das erfindungsgemäße Verfahren kann man wässrige Kobaltsulfatlösungen herstellen, die einen pH-Wert von mindestens 4 aufweisen und die nur äußerst geringe Anteile an Ionen enthalten, die in Lithium-Ionen-Batterien stören. Weiterhin lässt sich das erfindungsgemäße Verfahren einfach und sicher handhaben.

Die Erfindung wird durch Arbeitsbeispiele weiter verdeutlicht.

### Allgemeine Bemerkung: NL: Normliter

Der pH-Wert wurde jeweils mit einer Glaselektrode (Kombinationselektrode) bei 23°C bestimmt, die bei pH-Werten von 4 und 7 mit Pufferlösungen kalibriert war.

Reaktionsapparatur: Doppelmantel-Rohrreaktor (Innendurchmesser: 50 mm, Höhe 500 mm, davon genutzt: 300 mm, mit Siebboden. Der Doppelmantel-Rohrreaktor war über einen Umpumpkreislauf mit einem Vorratsgefäß verbunden, so dass man Lösungen unten aus dem Doppelmantel-Rohrreaktor entnehmen, in das Vorratsgefäß leiten und Lösungen oben in den Doppelmantel-Rohrreaktor hineinpumpen kann. Am Zulauf des Doppelmantel-Rohrreaktors befand sich ein Wärmetauscher.

### Beispiel 1

### Schritt 1 (a)

In dem Doppelmantel-Rohrreaktor der Reaktionsapparatur legte man 1,3 kg Kobaltmetall vor (Elektrodenbruchstücke, Abmessungen: Dicke 1 bis 2 mm, Durchmesser 20 mm, kreisförmiger Querschnitt). Das Vorratsgefäß befüllte man mit 221 g 20 Gew.-% wässriger Schwefelsäure.

Nach Einstellen einer Innentemperatur des Doppelmantel-Rohrreaktors von 98,5°C wurde ein Stickstoffstrom von 100 NL/h über einen Siebboden in den Doppelmantel-Rohrreaktor eingeleitet und die Pumpe des Umpumpkreislauf mit einer Pumprate von 1,06 l/h in Betrieb gesetzt. Die wässrige Schwefelsäure/saure Kobaltsulfatlösung aus dem Vorratsgefäß wurde stets mit einer Temperatur von ca. 98°C dem Doppelmantel-Rohrreaktor zugeführt.

Nach 7,6 Stunden hatte die saure Kobaltsulfatlösung im Vorratsgefäß einen pH Wert von 1 (Restmenge Schwefelsäure ca. 5 g/I).

### Schritt 1 (b)

Daraufhin leitete man in den Doppelmantel-Rohrreaktor anstelle des Stickstoffs 100 NL/h Luft ein. Nach 33 Stunden Schritt (b) entnahm man die Kobaltsulfatlösung aus dem Vorratsgefäß und bestimmte pH-Wert und Konzentration wie folgt: pH-Wert 5,42; Konzentration: 8,8 g Co²⁺/100 g Lösung.

### Beispiel 2

### Schritt 2(a)

In dem Doppelmantel-Rohrreaktor der Reaktionsapparatur legte man 1,3 kg Kobaltmetall vor (Elektrodenbruchstücke, Abmessungen: Dicke 1 bis 2 mm, mittlerer Durchmesser 20 mm, unregelmäßiger vieleckiger Querschnitt, maximaler Durchmesser 40 mm). Das Vorratsgefäß befüllte man mit 221 g 20 Gew.-% wässriger Schwefelsäure.

Nach Einstellen einer Innentemperatur des Doppelmantel-Rohrreaktors von 98,5°C leitete man einen Stickstoffstrom von 100 NL/h über einen Siebboden in den Doppelmantel-Rohrreaktor ein und setzte die Pumpe des Umpumpkreislauf mit einer Pumprate von 1,06 l/h in Betrieb. Die wässrige Schwefelsäure/saure Kobaltsulfatlösung aus dem Vorratsgefäß wurde stets mit einer Temperatur von ca. 98°C dem Doppelmantel-Rohrreaktor zugeführt.

Nach 7,6 Stunden hatte die saure Kobaltsulfatlösung im Vorratsgefäß einen pH Wert von 1,97 (Restmenge Schwefelsäure ca. 2,5 g/I), Co²⁺-Gehalt 8 g/100 g Lösung.

### Schritt 2(b)

Bei einer Reaktortemperatur von 98,5°C wurde eine Luftmenge von 25 NL/h über einen Siebboden in den Doppelmantel-Rohrreaktor eingeleitet und die saure Kobaltsulfatlösung mit einer Pumprate von 1,1 l/h umgepumpt. Die saure Kobaltsulfatlösung aus dem Vorratsgefäß führte man stets mit einer Temperatur von ca. 98°C dem Doppelmantel-Rohrreaktor zu. Nach 6 Stunden Betriebszeit wurde die Lösung abgelassen (pH 6,71; Konzentration: 8,4 g Co²⁺/100 g Lösung).

### V-3: Vergleichsbeispiel

In dem Doppelmantel-Rohrreaktor der Reaktionsapparatur legte man 1,3 kg Kobaltmetall vor (Elektrodenbruchstücke, Abmessungen: Dicke 1 bis 2 mm, Durchmesser 20 mm, kreisförmiger Querschnitt). Das Vorratsgefäß befüllte man mit 221 g 20 Gew.-% wässriger Schwefelsäure.

Nach Einstellen einer Innentemperatur des Doppelmantel-Rohrreaktors von 98,5°C wurde ein Stickstoffstrom von 100 NL/h über einen Siebboden in den Doppelmantel-Rohrreaktor eingeleitet und die Pumpe des Umpumpkreislauf mit einer Pumprate von 1,06 l/h in Betrieb gesetzt. Die wässrige Schwefelsäure/saure Kobaltsulfatlösung aus dem Vorratsgefäß wurde stets mit einer Temperatur von ca. 98°C dem Doppelmantel-Rohrreaktor zugeführt.

Nach 7,6 Stunden hatte die saure Kobaltsulfatlösung im Vorratsgefäß einen pH Wert von 1,97 (Restmenge Schwefelsäure ca. 2,5 g/I), nach 27 Stunden einen pH-Wert von 2,5 und nach 40 Stunden einen pH-Wert von 3,0. Danach stieg der pH-Wert nur noch mit einer Geschwindigkeit von 0,04 Einheiten pro Stunde an.

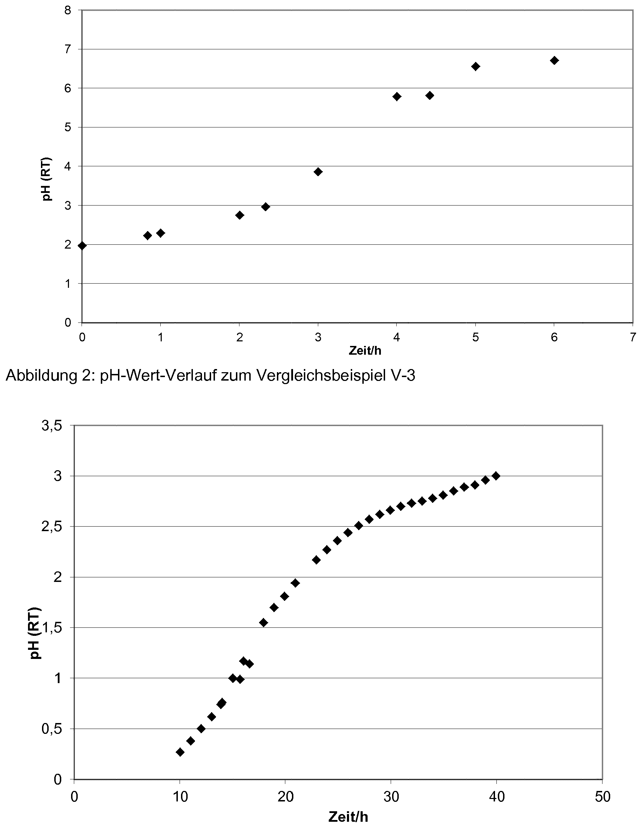

## Patentansprüche

1. Verfahren zur Herstellung einer wässrigen Kobaltsulfatlösung mit einem pH-Wert von mindestens 4, **dadurch gekennzeichnet, dass** man
(a) metallisches Kobalt in wässriger Schwefelsäure in einer Atmosphäre von Wasserstoff, von Inertgas oder von solchen Stickstoff/Sauerstoff-Gemischen auflöst, die Stickstoff und Sauerstoff in einem Volumenverhältnis im Bereich von 6 : 1 bis 100 : 1 enthalten, und
(b) die so entstandene saure Kobaltsulfatlösung mit Sauerstoff, Sauerstoff-haltigem Gas oder mit einer Substanz behandelt, die in wässrigem Milieu Sauerstoff abspalten kann.

2. Verfahren nach Anspruch 1, **dadurch gekennzeichnet, dass** man in Schritt (b) Substanz, die Sauerstoff abspalten kann, wählt aus H₂O₂, anorganischen Peroxiden, anorganischen Persulfaten und anorganischen Percarbonaten.

3. Verfahren nach Anspruch 1 oder 2, **dadurch gekennzeichnet, dass** man Schritt (b) in Gegenwart von metallischem Kobalt durchführt.

4. Verfahren nach einem der Ansprüche 1 bis 3, **dadurch gekennzeichnet, dass** man Schritt (a) bei einer Temperatur im Bereich von 80 bis 110°C durchführt.

5. Verfahren nach einem der Ansprüche 1 bis 4, **dadurch gekennzeichnet, dass** man in Schritt (a) eine wässrige Schwefelsäure einsetzt, die eine Konzentration im Bereich von 10 bis 30 Gew.-% aufweist.

6. Verfahren nach einem der Ansprüche 1 bis 5, **dadurch gekennzeichnet, dass** man Schritt (b) bei einer Temperatur im Bereich von 80 bis 110°C durchführt.

7. Verfahren nach einem der Ansprüche 1 bis 6, **dadurch gekennzeichnet, dass** die wässrige Kobaltsulfatlösung einen Na⁺-Gehalt von maximal 1.000 ppm aufweist, bezogen auf Kobalt.

8. Verfahren nach einem der Ansprüche 1 bis 7, **dadurch gekennzeichnet, dass** die wässrige Kobaltsulfatlösung einen Gehalt an Eisenionen von maximal 50 ppm aufweist, bezogen auf Kobalt.

9. Verfahren nach einem der Ansprüche 1 bis 8, **dadurch gekennzeichnet, dass** die wässrige Kobaltsulfatlösung einen Gehalt an Kalziumionen von maximal 50 ppm aufweist, bezogen auf Kobalt.

10. Verfahren nach einem der Ansprüche 1 bis 9, **dadurch gekennzeichnet, dass** die wässrige Kobaltsulfatlösung einen Gehalt an Kupfer(II)-ionen von maximal 50 ppm aufweist, bezogen auf Kobalt.

11. Verfahren nach einem der Ansprüche 1 bis 10, **dadurch gekennzeichnet, dass** die wässrige Kobaltsulfatlösung einen Gehalt an Aluminiumionen von maximal 50 ppm aufweist, bezogen auf Kobalt.

12. Verfahren nach einem der Ansprüche 1 bis 11, **dadurch gekennzeichnet, dass** die wässrige Kobaltsulfatlösung einen Gehalt an Chrom(III)-ionen von maximal 50 ppm aufweist, bezogen auf Kobalt.

13. Verfahren nach einem der Ansprüche 1 bis 12, **dadurch gekennzeichnet, dass** man weiterhin
(c) die so entstandene wässrige Kobaltsulfatlösung mit Hilfe eines Filters aufreinigt.

14. Verfahren nach einem der Ansprüche 1 bis 13, **dadurch gekennzeichnet, dass** man weiterhin
(d) die so entstandene wässrige Kobaltsulfatlösung mit Hilfe eines Ionenaustauschers aufreinigt.

## Claims

1. A process for preparing an aqueous cobalt sulfate solution having a pH of at least 4, wherein
(a) metallic cobalt is dissolved in aqueous sulfuric acid in an atmosphere of hydrogen, of inert gas or of those nitrogen/oxygen mixtures which comprise nitrogen and oxygen in a volume ratio in the range from 6:1 to 100:1, and
(b) the resulting acidic cobalt sulfate solution is treated with oxygen, oxygen-comprising gas or with a substance which can release oxygen in an aqueous medium.

2. The process according to claim 1, wherein, in step (b), the substance which can release oxygen is selected from among H₂O₂, inorganic peroxides, inorganic persulfates and inorganic percarbonates.

3. The process according to claim 1 or 2, wherein step (b) is carried out in the presence of metallic cobalt.

4. The process according to any of claims 1 to 3, wherein step (a) is carried out at a temperature in the range from 80 to 110°C.

5. The process according to any of claims 1 to 4, wherein an aqueous sulfuric acid having a concentration in the range from 10 to 30% by weight is used in step (a).

6. The process according to any of claims 1 to 5, wherein step (b) is carried out at a temperature in the range from 80 to 110°C.

7. The process according to any of claims 1 to 6, wherein the aqueous cobalt sulfate solution has an Na⁺ content of not more than 1000 ppm, based on cobalt.

8. The process according to any of claims 1 to 7, wherein the aqueous cobalt sulfate solution has a content of iron ions of not more than 50 ppm, based on cobalt.

9. The process according to any of claims 1 to 8, wherein the aqueous cobalt sulfate solution has a content of calcium ions of not more than 50 ppm, based on cobalt.

10. The process according to any of claims 1 to 9, wherein the aqueous cobalt sulfate solution has a content of copper(II) ions of not more than 50 ppm, based on cobalt.

11. The process according to any of claims 1 to 10, wherein the aqueous cobalt sulfate solution has a content of aluminum ions of not more than 50 ppm, based on cobalt.

12. The process according to any of claims 1 to 11, wherein the aqueous cobalt sulfate solution has a content of chromium(III) ions of not more than 50 ppm, based on cobalt.

13. The process according to any of claims 1 to 12, wherein, in addition,
(c) the resulting aqueous cobalt sulfate solution is purified by means of a filter.

14. The process according to any of claims 1 to 13, wherein, in addition
(d) the resulting aqueous cobalt sulfate solution is purified by means of an ion exchanger.

## Revendications

1. Procédé de fabrication d'une solution aqueuse de sulfate de cobalt ayant un pH d'au moins 4, **caractérisé en ce que**
(a) du cobalt métallique est dissous dans de l'acide sulfurique aqueux dans une atmosphère d'hydrogène, de gaz inerte ou de mélanges azote/oxygène qui contiennent de l'azote et de l'oxygène en un rapport en volume dans la plage allant de 6:1 à 100:1, et
(b) la solution acide de sulfate de cobalt ainsi formée est traitée avec de l'oxygène, un gaz contenant de l'oxygène ou avec une substance qui peut cliver de l'oxygène en milieu aqueux.

2. Procédé selon la revendication 1, **caractérisé en ce qu'**à l'étape (b), la substance qui peut cliver de l'oxygène est choisie parmi H₂O₂, les peroxydes inorganiques, les persulfates inorganiques et les percarbonates inorganiques.

3. Procédé selon la revendication 1 ou 2, **caractérisé en ce que** l'étape (b) est réalisée en présence de cobalt métallique.

4. Procédé selon l'une quelconque des revendications 1 à 3, **caractérisé en ce que** l'étape (a) est réalisée à une température dans la plage allant de 80 à 110 °C.

5. Procédé selon l'une quelconque des revendications 1 à 4, **caractérisé en ce qu'**à l'étape (a), un acide sulfurique aqueux qui présente une concentration dans la plage allant de 10 à 30 % en poids est utilisé.

6. Procédé selon l'une quelconque des revendications 1 à 5, **caractérisé en ce que** l'étape (b) est réalisée à une température dans la plage allant de 80 à 110 °C.

7. Procédé selon l'une quelconque des revendications 1 à 6, **caractérisé en ce que** la solution aqueuse de sulfate de cobalt présente une teneur en Na⁺ d'au plus 1 000 ppm, par rapport au cobalt.

8. Procédé selon l'une quelconque des revendications 1 à 7, **caractérisé en ce que** la solution aqueuse de sulfate de cobalt présente une teneur en ions fer d'au plus 50 ppm, par rapport au cobalt.

9. Procédé selon l'une quelconque des revendications 1 à 8, **caractérisé en ce que** la solution aqueuse de sulfate de cobalt présente une teneur en ions calcium d'au plus 50 ppm, par rapport au cobalt.

10. Procédé selon l'une quelconque des revendications 1 à 9, **caractérisé en ce que** la solution aqueuse de sulfate de cobalt présente une teneur en ions cuivre (II) d'au plus 50 ppm, par rapport au cobalt.

11. Procédé selon l'une quelconque des revendications 1 à 10, **caractérisé en ce que** la solution aqueuse de sulfate de cobalt présente une teneur en ions aluminium d'au plus 50 ppm, par rapport au cobalt.

12. Procédé selon l'une quelconque des revendications 1 à 11, **caractérisé en ce que** la solution aqueuse de sulfate de cobalt présente une teneur en ions chrome (III) d'au plus 50 ppm, par rapport au cobalt.

13. Procédé selon l'une quelconque des revendications 1 à 12, **caractérisé en ce qu'**en outre
(c) la solution aqueuse de sulfate de cobalt ainsi formée est purifiée à l'aide d'un filtre.

14. Procédé selon l'une quelconque des revendications 1 à 13, **caractérisé en ce qu'**en outre
(d) la solution aqueuse de sulfate de cobalt ainsi formée est purifiée à l'aide d'un échangeur d'ions.
